# EUROPEAN PATENT APPLICATION

(11) **EP 4 643 979 A1**
(43) Date of publication of application: **05.11.2025**
(21) Application number: 24174076.0
(22) Date of filing: 03.05.2024
(51) Int. Cl.: B01D 61/06, B01D 61/08, B01D 65/02, B01D 65/08, C02F 1/44, F04B 43/00

(54) **SYSTEM FOR REVERSE OSMOSIS**

(71) Applicant: Danfoss A/S, 6430 Nordborg (DK)
(72) Inventor: Hilbrecht, Lars Bjarne, 6560 Sommersted (DK)
(74) Representative: Gulde & Partner

(57) **Abstract**

The present disclosure relates to a system (100) for reverse osmosis, RO, comprising a first membrane unit (10) and a first generator drive (G1). The first membrane unit (10) comprises a first feed inlet (11), a first concentrate outlet (12), a first permeate outlet (13), and a first membrane (14). The first generator drive (G1) is fluidly connected to and disposed downstream of the first membrane unit (10). The first generator drive (G1) is configured for recuperating energy from a first fluid flow effluent from the first membrane unit (10) based on a first shaft speed of the first generator drive (G1) and for inducing oscillations of the first membrane (14) by modulating the first shaft speed to generate pressure pulses in the first fluid flow. The present disclosure further relates to a method of operating the system (100), a generator drive, and the use of a generator drive for inducing oscillations of one or more membranes in the system (100).

## Description

### Technical Field

The invention relates to a system for reverse osmosis, particularly to a system using a generator drive for energy recovery and membrane cleaning. The invention further relates to a method for operating such a system, a generator drive, and the use thereof, for energy recovery and membrane cleaning.

### Technical Background

Reverse osmosis, RO, is frequently applied in desalination of sea, brackish, wastewater, food processing, pharmaceutical industry, high purity application, and so forth. In the RO process, the fluid to be treated is fed under a certain pressure into the feed chamber of a membrane unit or via a feed connection to the membrane unit, and then penetrates the membrane to leave the membrane unit as permeate, for example, desalinated water having a reduced content of salt. RO is known from e.g., US 9 695 064 B2.

One limitation of employing the RO lies in that it is typically accompanied by a membrane fouling process, through which biological fouling occurs and afterwards particles or solutes (e.g., minerals) are deposited as foulants on the membrane surface, as the feed fluid traverses the membrane. Membrane fouling is the major cause of membrane flow resistance (e.g., product flux decline or increased transmembrane pressure, TMP) and thus, the performance degradation of membranes in operation. Conventionally, membrane cleaning in the RO involves a chemical process, which requires a daily shutdown time of ceasing the production to clean the membrane chemically, imposing unnecessary production delays and constrained production capacities.

For the sake of production efficiency, the efficacy of a chemical-free, physical cleaning process has been investigated to reduce the system downtime and the frequency of applying chemical process. A physical cleaning approach takes advantage of the physical characteristics, such as the deformability, of a membrane, and generates a controlled membrane deformation to induce shear stresses at the foulant-membrane interface, which facilitates the detachment or removal of the foulants from the membrane.

Membrane deformation can be induced through the control of applied pressure across a membrane interface. For instance, the applied pressure can be modulated by controlling the flow rate of the liquid into or out of the membrane unit, such that liquid is pressurized with pulsation, and thus acts as the medium for propagating the pulsation onto the membrane surface, to induce oscillated membrane deformation to shake off the deposits.

Pressure pulses or varying driving force can be generated based on a timed control of multiple valves governing flow through a membrane module, as described in WO 2021/072345 A1. A pulse water stroke may act as a hammer which directionally hits and mechanically shakes the membrane, and preferably is generated by closing or opening a valve quickly at the end of a pipeline system, as described in US 10507432 B2. Thus, the pressure modulation for membrane cleaning in the state of the art largely entails the deployment of valves in the RO system, and relies on the timed control of such valves or a pump.

However, the control of valves or centrifugal pumps for pressure modulation adds complexity to operation as it involves sophisticated control systems. Valves may also have inherent limitations in how quickly they can open and close in response to control signals and result in delay in rapid pressure fluctuation. Typically, valves are mechanical components that are prone to wear and failure over time. Thus, incorporating valves into the RO system increases the risk of system failure and downtime for repairment and the difficulty of maintenance and troubleshooting.

It is thus an object underlying the present invention to overcome or at least reduce the drawbacks of the prior art and to provide a system for reverse osmosis with an improved energy efficiency and optimal or desired cleaning performance.

### Summary of Invention

The objective of the disclosure is achieved and the disadvantages of the prior art are overcome or at least reduced by the subject-matter of the present invention, i.e., by a system for reverse osmosis, RO, and/or by a method for operating such system, and/or by a generator drive, and/or by the use of generator drive, as defined in the appended set of claim.

An aspect of the present disclosure relates to a system for reverse osmosis, RO. The RO system comprises a first membrane unit with a first feed inlet, a first concentrate outlet, a first permeate outlet, and a first membrane. The first membrane unit comprises a high-pressure chamber and a low-pressure chamber that are separated by a first membrane. These chambers preferably form a RO tank that is configured to house the first RO process and to withstand the modulated pressures. The first membrane unit may comprise more inlets and/or outlets, such as multiple first feed inlets, multiple first concentrate outlets and/or multiple first permeate outlets. For the sake of conciseness, in the following it is only referred to one of these inlet and outlets, respectively. In a first membrane unit comprising multiple inlets and/or outlets, the following explanations can refer to relations between individual inlets and/or outlets and/or to relations between multiple of inlets and/or outlets.

During a filtration process, the (at least one) first feed inlet preferably is configured to supply a feed fluid flow to the high-pressure RO chamber, and the (at least one) first permeate outlet preferably is configured to discharge the permeate that passes through said chamber. The low-pressure RO chamber preferably is configured to receive a permeate, i.e., the feed fluid with reduced solute concentration, via the first membrane. The (at least one) first permeate outlet preferably is configured to discharge the permeate from the first low-pressure RO chamber. The up-concentrated flow fluid (e.g., brine) is discharged via the (at least one) first concentrate outlet at a pressure that is about the same as the pressure of the feed fluid at the (at least one) first feed inlet. The permeate is discharged via the (at least one) first permeate outlet at a pressure significantly lower than the feed pressure, preferably as low as possible for having an optimal pressure difference (e.g., TMP) at the membrane.

The RO system further comprises a first generator drive. The first generator drive is fluidly connected to and disposed downstream of the first membrane unit. The first generator drive is configured for recuperating energy from a first fluid flow effluent from the first membrane unit based on a first shaft speed of the first generator drive. In this case, the first generator drive is configured to function, e.g., as an electric energy generator in a generator mode. The first generator drive preferably is an energy recovery unit design based on a positive displacement hydraulic motor, preferably, in form of an (e.g., a bidirectional) axial piston motor connected to a first electric machine which is connected to a variable frequency drive (VFD) (or e.g., in the form of, or comprised in a VFD) which is able to operate in all four modes, i.e., four quadrants (motor left/right and generator left/right operation). The first generator drive operating in any of all the four modes or quadrants preferably is further configured to concurrently operate in a membrane cleaning mode, as is detailed below.

The first generator drive preferably is fluidly connected to the (at least one) first concentrate outlet or to the (at least one) first permeate outlet, depending on the actual requirement or established standard of an RO process. Thereby, the first generator drive is configured to recuperate energy from the first fluid flow out of the (at least one) concentrate outlet of the first membrane, preferably from that fluid flow at which the pressure is substantially the same as that at the first feed inlet. The first fluid flow with a certain pressure flows through the first generator drive at a certain flow rate and imparts kinetic energy to the first generator drive. Therefore, the first generator drive recuperates energy by transforming the kinetic energy of the first fluid flow into electric energy for system recovery, e.g., for use by one or more pumps in the RO system, and thus actively controls the recovery rate of the RO system. Alternatively, instead of, or in parallel to supplying the energy to the RO system, a first VFD of the first generator drive can modulate the internal DC voltage to an AC voltage on its inlet terminals, thus feeding the generated energy to an electrical grid.

The first generator drive recuperates energy based on the first shaft speed, preferably by dynamically adjusting or modulating the first shaft speed. Because the first shaft speed may affect or characterize how fast the first generator drive is configured or able to recuperate the energy from the first fluid flow, or how much (e.g., a maximal or minimal or average amount, or any other statistical metrics) energy can be recovered for a certain time period. Stated differently, an energy transfer rate of the first generator drive varies as a function of the first shaft speed. Applying this principle, the first generator drive preferably determines, calculates, or estimates the amount of the recuperated energy for a given duration based on the first shaft speed and/or the corresponding flow rate. Therefore, the first shaft speed preferably shapes the overall energy recovery or associated or relevant performance of the RO system (e.g., a TMP or flux rate of individual membrane unit).

The first generator drive preferably adjusts the first shaft speed based on a (holistic) perception of the (varying) operational conditions in the RO system (including without limitation, e.g., efficiency of the RO process, energy consumption of each device or energy recovery rate, the pressure at each inlet and outlet, membrane integrity, TMP, rejection rate of each membrane unit, etc.). For example, the first generator drive increases the first shaft speed to accelerate the energy recovery in response to energy recovery rate dropping below a energy recovery rate threshold, and/or in response to the energy consumption exceeding a consumption threshold, and/or in response to the efficiency of the RO process dropping below an RO efficiency threshold. Further preferred, the first generator drive adjusts the first shaft speed based on (varying) systematic requirements or demands for energy recovery and membrane cleaning efficiency. For another example, the first generator drive modulates its shaft speed to implement a cleaning cycle in response to the TMP exceeding a TMP threshold, and/or in response to the rejection rate exceeding a rejection rate threshold. The aforementioned various thresholds are preferably predefined according to the operational standard of an RO process. The first generator drive modulates the first shaft speed preferably according to one or more embodiments as described herein. When the operational conditions and various metrics in the RO system have the tendency to become steady, the first generator drive adjusts the first shaft speed to maintain the steady conditions. Thus, in response to one or more of the varying conditions as described above, the first generator drive transforms the kinetic energy of the first fluid flow into electric energy at variable frequency and speed (e.g., via a VFD). The (holistic) approach to shaft speed control by the first generator drive enables more effective coordination and optimization of the overall system performance, leading to more precise and efficient control of the system operation (e.g., the pump(s) or other generator drive(s) in the RO system).

The first generator drive preferably controls the flow rate (e.g., given in volume per second, liters per hour (L/h), or cubic meters per hour (m³/h)) of the first fluid flow passing through the first generator drive by determining, or dynamically adjusting the first shaft speed. In other words, the actual flow rate of the first fluid flow preferably is determined based on the first shaft speed, e.g., with reference to the given design parameters or characteristic curves available in the specification of the first generator drive. Namely, there is typically a predefined mapping between the flow rate and the shaft speed. Alternatively, in case that said mapping is not specified, the flow rate preferably is calculated based on the shaft speed and system parameters measured in real time. Such system parameters are preferably determined in an initial configuration of the RO system, e.g., using a flow meter or the like. The first generator drive preferably regulates the first shaft speed and accordingly, the flow rate, on the foundation of, or with the aim to meet a specific systematic requirement for energy recovery rate and/or membrane cleaning. Typically, the higher the flow rate or the higher the first shaft speed is, the higher the energy recovery rate that is reached.

In accordance with the factory specification (e.g., key characteristics, capabilities, and operating parameters (e.g., provided by the manufacturer) of a generator drive, a (predefined) permissible maximum shaft speed is predefined, and thus corresponds to a maximum permissible flow rate of the first fluid flow. Preferably, the first shaft speed is configured not to exceed the maximum shaft speed or a first threshold, so as to reduce the likelihood of malfunction and prolong the lifespan of the first generator drive. On the contrary, a minimum shaft speed preferably is set in conformity to a minimum requirement for energy recovery in RO system corresponding to a minimum flow rate. Optionally, the first shaft speed is configured not to drop below the minimum shaft speed or a second threshold under said minimum requirement. The adjustment of the first shaft speed results in the effect of regulating the flow rate or volume of the first fluid flow, and thus the energy recovery rate and membrane cleaning. In generator mode, the first generator drive can optionally configure or adjust the first shaft speed within a pre-set range between the minimum shaft speed and the (predefined) maximum shaft speed, i.e., between the first and second threshold, such that the proper functioning of the first generator drive can be ensured without compromising the energy recovery and/or membrane cleaning performance.

The modulation of the first shaft speed is preferably further conducted based on e.g., the system requirements specified by the operator, or the measured system parameters (including, without limitation, energy recovery rate, flow rate, flux rate or performance of the first membrane unit, etc.) that are automatically monitored in real time by the first generator drive or the RO system, or under the instruction received from an external device, e.g., a central controller or server in the control centre, or a user equipment of the operator in an Internet of Things, IoT, environment.

The first generator drive determines or adjusts the first shaft speed to reach a given flow rate specified in an energy recovery requirement (e.g., a required (minimal) recovery rate), and/or according to a measured flux performance or a transmembrane pressure (TMP) of the first membrane unit.

Membrane flux performance refers to the efficiency and effectiveness of a membrane in allowing the passage of solvent while retaining solutes. Flux is a measure of the rate at which the solvent passes through the membrane per unit area. It is typically expressed or defined in terms of volume per unit area per unit time (e.g., liters per square meter per hour (LMH)). A decreasing flux indicates that the passage of the fluid through the membrane is subject to an increasing resistance on account of the depositing foulants on the membrane.

TMP represents the pressure difference between the feed inlet and the permeate outlet. TMP is proportional to a flux rate based on their correlation under the ideal condition where the foulant and/or scaling does not exist. With the same flow rate of a feed flow, i.e., the same pressure in the high-pressure feed chamber, if the TMP increases over time, then the pressure at the permeate outlet is witnessing a decrease, thus signifying a decreasing volume of output permeate. The TMP can account for the resistance or rejection of feed flow in the membrane unit as the foulants accumulate on the membrane surface over time. Fouling on the membrane surface can increase resistance to solvent flow, requiring higher TMP, i.e., higher feed pressure, and thus higher energy consumption by the feed pump, to maintain the same level of desired flux rate. Namely, compared to the normal functioning of the membrane unit, the flux is reduced even if a high feed pressure is applied.

Thus, the flux (rate) or TMP of the first membrane unit indicates the extent (e.g., the rejection rate) of deposition of foulants and scaling, or contamination at the first membrane. Thus, they preferably serve as an indicator of the demand or an alert for membrane cleaning. Both of the two parameters are well-known in the art. Other equivalent or appropriate parameters are also applicable. The present disclosure is not limited in this respect. Managing fouling through proper pre-treatment and maintenance practices is essential for maintaining optimal TMP-flux relationships, and the energy efficiency of the RO system.

As an exemplary embodiment, system log data (e.g., a graph recorded by the first generator drive) of the first shaft speed varying for a certain time period preferably is utilized to estimate (a profile of) the energy recovery achieved by the first generator drive. The system log data preferably further comprises the flux performance (rejection rate) of the first membrane unit that is measured over time. The RO system preferably also creates a history profile of the first shaft speed, flux performance, TMP and so forth. Optionally, given the history profile, the first generator drive preferably determines, adjusts, or predicts the first shaft speed in real time according to the actual operational conditions, so as to optimize the overall system performance, and/or load balancing, e.g., among a plurality of generator drives and pump drives in the RO system.

Alternatively, a flow sensor preferably is arranged in the RO system to measure the flow rate, e.g., at the first feed inlet, at the first permeate outlet, and/or at the input or output of the first generator drive. The measurements of flow rate can be transmitted to the control centre (e.g., control unit or a server) or the first generator drive (e.g., the control unit thereof or preferably, a variable frequency drive (VFD)) to realize a closed-loop control. In this respect, the flow rate measured by the flow sensor (in conjunction with other measured parameters) advantageously serves as a feedback or indicator for the first generator drive to modulate the first shaft speed in such a way that the membrane cleaning effect as well as energy recovery performance, etc. are improved.

Specifically, in order to achieve the membrane cleaning effect, the first generator drive is further configured for inducing oscillations of the first membrane by modulating the first shaft speed to generate pressure pulses in the first fluid flow. As noted above, the adjustment or modulation of the first shaft speed automatically affects or shapes e.g., the flow rate of the first fluid flow passing through the first generator drive. A rise in the first shaft speed accelerates the arrival or influx of the first fluid flow at the first generator drive (by increasing the flow rate thereof), thereby reducing the pressure in the feed chamber of the first membrane unit. Conversely, a drop in the first shaft speed hinders or impedes the arrival or influx of the first fluid flow at the first generator drive (by decreasing the flow rate thereof), thereby increasing the pressure in the feed chamber of the first membrane unit. In other words, the flow rate of the first fluid flow is modulated in response to the first shaft speed modulated by the first generator drive. The first generator drive can thus control or modulate the pressure in the feed chamber, by means of manipulating the flow rate of the first fluid flow based on the first shaft speed.

When pressure pulses are generated by flow pulses in the first fluid flow, they are ultimately imparted to the surface of the first membrane with sheer stresses to cause the vibration thereof. As a consequence, the foulants accumulated on the oscillating foulant-membrane interface preferably come loosened or undermined upon undergoing the sheer stresses. Due to the shaft speed modulation for system energy recovery and oscillation induction on the first membrane, the first generator drive is configured to operate in e.g., both a membrane cleaning mode and the aforementioned generator mode, and thus effectively implements the physical cleaning process for the first membrane in parallel to a required energy recovery.

Preferably, the first generator drive imparts pressure pulses to the first fluid flow by modulating the first shaft speed following various specific patterns. Such patterns preferably includes a periodic pulsation or periodic fluctuation in the first shaft speed that occurs or bursts (e.g., instantaneously or temporarily) at a certain periodicity. The periodic pulsation preferably have a limited amplitude to preserve the integrity of the membrane and/or minimize the negative impact or disturbance on energy recovery rate. In response, the flow rate of the first fluid flow fluctuates (e.g., temporarily and/or slightly), i.e., increases and decreases to induce periodic membrane deformation or oscillation back and forth towards the concentrate and permeate side, respectively. As such, the first generator drive achieves the effect of dislodging the foulants from the first membrane, and thus a desired cleaning process therefor. The periodic modulation exemplified above preferably further enhances the effectiveness and efficiency of the cleaning process. In this manner, the RO system excludes the necessity of a frequent chemical process, and minimizing the system downtime as required for such chemical process. Furthermore, by distributing the cleaning task to the first generator drive, the RO system evades relying exclusively on control of the valve(s) or pump drive(s). Thus, the durability or longevity of the pump drive(s) is prolonged and system reliability is elevated when the first generator drive bear at least a portion of the processing burden.

According to a preferred embodiment, the RO system further comprises a feed pump (or a pump drive, in other words) fluidly connected to the first feed inlet of the first membrane unit. Thus, the feed pump delivers the feed fluid into the first feed inlet of membrane unit based on the shaft speed of the feed pump. Thus, the flow rate of the feed fluid pumped into the first membrane unit varies dependent on (e.g., proportional to) the shaft speed of the feed pump.

The feed pump is configured to modulate its shaft speed based on the first shaft speed of the generator drive. Accordingly, in response to the fluctuation in the shaft speed of the pump, pressure pulses are generated in the feed fluid being pumped. A rise in the pump shaft speed accelerates the arrival or influx of the feed flow at the first feed inlet (by increasing the flow rate thereof), thereby increasing the pressure in the feed chamber of the first membrane unit. Conversely, a drop in the pump shaft speed retards the arrival or influx of the feed flow at the first feed inlet (by decreasing the flow rate thereof), thereby reducing the pressure in the feed chamber of the first membrane unit. Based on a similar principle of the shaft speed modulation as illustrated above, the feed pump also achieves a cleaning effect on the first membrane by modulating its shaft speed.

As noted above, since the first shaft speed of the first generator drive is modulated for an effective cleaning process, the shaft speed of the feed pump preferably is consequently modulated in collaboration and/or resonance with the first shaft speed to enhance the cleaning effect on the first membrane. To this end, the exemplary and alternative embodiments are detailed below.

According to a preferred embodiment, the first generator drive is operatively connected to the feed pump. The first generator drive is configured to transfer the electric energy to the feed pump based on the modulated first shaft speed. The first generator drive or feed pump is configured to modulate the shaft speed of the feed pump based on the transferred electrical energy. The first generator drive or feed pump preferably performs such modulation through communication with the feed pump, preferably, by means of the respective VFDs thereof. This is an exemplary embodiment of modulating the shaft speed of the feed pump based on the first shaft speed, wherein the feed pump and the first generator drive operate in resonance for the purpose of the cleaning process. In other words, by modulating its shaft speed, the feed pump is responsive to the energy transfer by the first generator drive and/or the modulated first shaft speed.

In an exemplary embodiment, the first generator drive preferably supplies the recuperated energy to the feed pump, e.g., based on the first shaft speed which corresponds to an energy transfer/recovery rate and/or is modulated for cleaning purpose. As noted above, the parameter "shaft speed" preferably is used to determine or measure the energy recovery rate of the RO system. Accordingly, the total amount of the electric energy (e.g., in the unit of Watt (W) or kW) transferred from the first generator drive to the feed pump, or the associated energy transfer rate (e.g., in the unit of Joule per second (J/s) or kJ/s) can be calculated based on the first shaft speed and/or pressure. The first generator drive and/or feed pump preferably modulates the shaft speed of the feed pump according to the actual amount of the transferred electric energy or energy transfer rate, e.g., by utilizing the energy supplied from the first generator drive. Stated differently, the shaft speed of the pump preferably varies dependent on the energy transfer, e.g., how fast or how much the energy supplied from the first generator drive. The shaft speed of the feed pump optionally follows a certain (e.g., periodic) pattern to achieve the cleaning effect as detailed above. Thereby, the feed pump can contribute to the effective cleaning of the first membrane. With the feed pump controlled based on the operation of the first generator drive, the RO system takes account of the dynamic behaviours or operational conditions/parameters of both components. For instance, the feed pump and the first generator drive cooperate to cater for the system demand, with the workload assigned to them in equilibrium. Hence, the RO system can operate the feed pump and the first generator drive through a better precise, informed or on-demand control to improve the RO system performance.

According to a preferred embodiment, the feed pump is configured to modulate the shaft speed of the feed pump to remain constant when the first shaft speed fluctuates periodically, fluctuate reversely with respect to the fluctuation of the first shaft speed, and/or fluctuate periodically when the first shaft speed remains constant. The shaft speed modulation is controlled by preferably at least one control unit deployed in (the control centre of) the RO system, or integrated in the VFD of the feed pump. This is an alternative and exemplary embodiment of modulating the shaft speed of the feed pump based on the first shaft speed, wherein the feed pump and the first generator drive operate in collaboration for the purpose of the cleaning process. In this exemplary embodiment, the feed pump and the first generator drive operate based on the timing of their respective shaft speed modulation.

As one preferred example of the timing-based collaboration, the feed pump is configured to modulate the shaft speed of the feed pump to remain constant when the first shaft speed fluctuates periodically, and/or to fluctuate periodically when the first shaft speed remains constant. That is, the feed pump and the first generator drive do not concurrently induce oscillation on the first membrane, and therefore, do not enable their cleaning function at the same time. Thus, the cleaning process preferably is performed by one of the feed pump and the first generator drive for a given duration, and/or may alternate between them. This cleaning mode preferably is referred to as alternate cleaning mode. Neither of the feed pump and the first generator drive is overloaded when the cleaning task alternates between them. In this manner, the system performance and reliability are optimized.

In this prefer example, the fluctuations and pressure pulses preferably burst slightly (i.e., with a limited or miniature peak) and/or periodically in the pumped fluid flow (i.e., feed fluid flow into the first feed inlet), or the first fluid flow (i.e., concentrate or permeate) to manipulate the deformation of the first membrane. For instance, the fluctuation preferably is a transient dip or bump in the amplitude of the shaft speed of the feed pump or the first generator drive. For instance, the fluctuation preferably is e.g., a thorn-like spike but with moderate or little sharpness and for a short period.

When the first shaft speed experiences a temporary dip (or a downward spike), it can induce a decrease and increase (a down-and-up) in the flow rate of the first fluid flow. The pressure in the feed chamber accordingly experiences an increase and then a decrease, based on the principle as illuminated above. Conversely, when the shaft speed experiences a temporary bump (or an upward spike), it may lead to an up-and-down in flow rate of a fluid flow. The pressure in the feed chamber accordingly experiences a decrease and then an increase, based on the principle as illuminated above. Such (temporary and/or slight) fluctuations in a flow rate and flow pressure induce appropriate turbulent conditions within the first membrane unit that are conducive to membrane cleaning without impairment to the physical characteristics of the first membrane. Similar principle as elaborated above applies to the shaft speed modulation of the feed pump, and is omitted here for ease of brevity.

By means of this collaborative shaft speed modulation (i.e., the alternate cleaning mode), the RO system reduces excessive oscillations on the first membrane to preserve the physical characteristics (integrity, resilience, etc.) and the longevity of the first membrane, while improving the cleaning performance.

As another preferred example of the timing-based collaboration, the feed pump is configured to modulate the shaft speed thereof to fluctuate reversely with respect to the fluctuation of the first shaft speed. In other words, the feed pump and the first generator drive concurrently induce oscillation on the first membrane, i.e., enabling their cleaning function at the same time. Thus, both of the feed pump and the first generator drive preferably simultaneously perform the cleaning process for a given duration, e.g., including at least one short duration of a slight fluctuation. In this example, the concurrent fluctuations in the first shaft speed and pump shaft speed may burst slightly (e.g., with a highly limited peak) and/or periodically but are reverse with respect to each other, which means the amplitude changes corresponding to the concurrent fluctuations are in opposite directions. This cleaning mode preferably is referred as synchronous cleaning mode.

In greater detail, the fluctuation is for instance a transient dip in the amplitude of the first shaft speed of the first generator drive, whereas the fluctuation is a transient upward spike in the amplitude of the shaft speed of the feed pump, or vice versa. In this embodiment, there are reverse or out-of-phase fluctuations generated in the flow rate of the feed flow (an upward spike) and the first fluid flow (a downward spike). The upward spike and the downward spike can create a synergy. Both of them intensify the pressure in the feed chamber. The pressure pulses from different directions are collectively exerted on the first membrane, inducing oscillation of the membrane towards the permeate chamber then back in place. The resultant force of the two pressure pulses with limited peak values appropriately induces the oscillation on the first membrane enhancing the cleaning effect. Compared to the aforesaid alternate cleaning mode, in the synchronous cleaning mode, the simultaneous out-of-phase fluctuations can promote the oscillation intensity by a factor of 1.5 to 2.5, in particular, 1.7 to 2.0, and preferably 1.8 or 2.0, which facilitates the detachment and removal of fouling deposits. The cleaning effect is preferably observed using a sensor arranged to measure the TMP of the first membrane. Given the same feed pressure, a decreased TMP reflects an improved flux rate, indicative of an effective cleaning process.

By means of this collaborative shaft speed modulation (i.e., synchronous cleaning mode), the RO system reduces excessive oscillations on the first membrane to preserve the physical characteristics (integrity, resilience, etc.) and the longevity of the first membrane, while further enhancing the cleaning efficiency.

Although the above embodiment exemplifies a transient downward spike in the first shaft speed and a transient upward spike in the pump shaft speed, nevertheless, they interchangeably achieve the same synergistic cleaning effect as described above. In case of downward spike in the pump shaft speed and upward spike in the first shaft speed, the pressure within the feed chamber will decrease and then rebound. If so, the oscillation of the membrane would go towards the feed chamber and then back in place. Likewise, an effective cleaning process is realized.

As yet another example of the timing-based collaboration, the RO system preferably is configured to operate in a hybrid cleaning mode in which the alternate cleaning mode and synchronous cleaning mode are combined, e.g., to switch between the two modes on actual operation demand, or as per a certain regular pattern, or the like. The hybrid cleaning mode incorporates the aforementioned advantages of both the alternate cleaning mode and synchronous cleaning mode.

The collaboration and resonance as described above can be combined. For example, the feed pump preferably modulates its shaft speed based on the above timing as well as the energy transferred from the first generator drive, e.g., utilize the transferred energy to modulate its shaft speed to accord with the above timing.

The present disclosure also relates to a multi-stage RO system. In the embodiment hereinafter, a 2-stage RO system is discussed for illustrative purpose. The number of stages according to the present disclosure is not limited to 2, but can be extended to 3 or beyond. For example, a 3-stage preferably is constructed based on the same or similar principle of the exemplified 2-stage RO system, and thus fall within the scope of the present invention.

According to a preferred embodiment, the RO system comprises a second membrane unit with a second feed inlet, a second concentrate outlet, a second permeate outlet and a second membrane. The RO system further comprises a second generator drive fluidly connected to and disposed downstream of the second membrane unit. The second generator drive is configured for recuperating energy from a second fluid flow effluent from the second membrane unit, e.g., based on a second shaft speed of the second generator drive. The second generator drive is configured for inducing oscillations of the second membrane by modulating the second shaft speed.

In this embodiment, the RO system is 2-stage, as two membrane units are employed for producing permeate. The second membrane unit preferably has the same or similar structure and/or function as the first membrane unit. The second generator drive preferably has the same or similar structure and/or function as the first generator drive. The above description of the first membrane unit and first generator drive preferably apply to the second membrane unit and the second generator drive, respectively, for which, the description is omitted for the sake of conciseness.

According to a preferred embodiment of a multi-stage RO system, the first generator drive is fluidly connected between a first concentrate outlet of the first membrane unit and a second feed inlet of the second membrane unit. The first generator drive is configured to pump the first fluid flow via the second feed inlet into the second membrane unit. The second generator drive is fluidly connected to a second concentrate outlet of the second membrane unit. The second generator drive is operatively connected to the first generator drive. The second generator drive is configured to transfer electrical energy to the first generator drive based on the modulated second shaft speed, such that the first shaft speed is modulated based on the electrical energy transferred from the second generator drive. Alternatively, the first generator drive is configured to modulate its shaft speed based on the timing of the shaft speed of the second generator drive. In this embodiment, the two stages form a serial setup, i.e., are cascaded in series.

As noted above, a generator drive can switch between a motor mode and a generator mode. Thus, in this exemplary embodiment, the second generator drive operating in generator mode can transfer the generated electrical energy to other pumps or drives, for example, to the first generator drive operating in motor mode in which the first generator drive further pressurizes, i.e., adds pressure to the first fluid flow and pumps it into the second feed inlet of the second membrane unit.

The second generator drive in generator mode preferably functions to transfer electrical energy to the first generator drive in motor mode, in the same manner as the first generator drive in generator mode transfers electrical energy to a feed pump, as discussed above. In this case, the energy recovery performance of the multi-stage RO system depends on at least the modulated second shaft speed. Therefore, the first generator drive and the second generator drive preferably function to modulate their respective shaft speed in resonance and/or in collaboration for the membrane cleaning purpose. In any event, the first generator drive may modulate the first shaft speed based on the second shaft speed.

As an example, the first generator drive preferably utilizes the energy transferred from the second generator drive to modulate the first shaft speed, and to pump the first fluid flow into the second feed inlet based on the modulated first shaft speed. In response to the modulated first shaft speed, the flow rate of the pumped fluid is modulated to generate pressure pulses in the fluid flow within the overall RO system. Thereby, the first generator drive in a motor mode can contribute to the effective cleaning on the first and second membrane. With the first generator drive controlled based on the operation of the second generator drive, the RO system takes account of the dynamic behaviours or operating parameters of both components simultaneously. For instance, the first and second generator drive cooperate to cater for the system demand, with the workload assigned to them in equilibrium. Hence, the RO system can operate the first and second generator drive through a better precise, informed or on-demand control to improve the overall RO system performance.

Alternatively or additionally, the second generator drive can transfer the electrical energy to the first generator drive via a line in form of a DC bus. For instance, the first and second generator drive comprise a first VFD and second VFD, respectively, which are operatively connected. In this case, the first VFD receives from the second VFD the electrical energy transformed from the kinetic energy of a second fluid flow out of the second concentrate outlet. Based on the transferred energy, the first VFD modulates the first shaft speed to further pressurize the first fluid flow as well as induce oscillations in the first and second membrane to implement a cleaning process. The second VFD can modulate the second shaft speed to change the energy recovery rate, which contributes to effectuating or validating the modulation of the first shaft speed.

Alternatively or additionally, the multi-stage RO system further comprises a feed pump fluidly connected to the first feed inlet, and configured to pump the feed solution into the first feed inlet. The feed pump preferably modulates the shaft speed thereof based on the first and/or second shaft speed, to resonate and/or collaborate with the first and/or second generator drive in similar manner as discussed above, and contribute to the cleaning efficiency optimization.

Further preferred, the first and second generator drive and the feed pump modulate their respective shaft speed in response to the operational conditions, systematic requirements, and so forth, to achieve a desired level of energy recovery and cleaning effect (e.g., a designated rejection rate or TMP metric). As an exemplary embodiment, the first generator drive and/or second generator drive and/or the feed pump operate in one of an alternate, concurrent or hybrid cleaning mode, as detailed above, based on the timing of their respective shaft speed modulation. By means of the collaborative shaft speed modulation, the RO system reduces excessive oscillations on the first membrane to preserve the physical characteristics (integrity, resilience, etc.) and the longevity of the first membrane. Meanwhile, the collaboration of the first generator drive and/or second generator drive and/or the feed pump maximizes the cleaning efficiency, renders the chemical process less essential or needless, reduces the system downtime and optimizes the loading balancing among the devices.

According to a preferred embodiment, the first feed inlet of the first membrane unit is fluidly connected to a first feed branch of the feed pump. The second feed inlet of the second membrane unit is fluidly connected to a second feed branch of the feed pump. The first generator drive and the second generator drive, disposed downstream of the respective membrane unit, are configured to alternately or simultaneously induce oscillations of the first membrane and the second membrane, respectively, by modulating the first shaft speed and the second shaft speed, respectively. The alternate or simultaneous oscillations of the membranes ensure that fouling is prevented uniformly across all the membrane units. This helps exclude uneven fouling patterns for different membrane units, and ensures the consistency of the RO system reliability, permeate quality and production rates of all the membrane units.

In this embodiment, the two stages form a parallel setup, i.e., are parallel to each other. It is to be noted that the number of stages in the parallel setup is not limited to 2, but can be rather 3, or beyond. Thus, a plurality of feed branches can be arranged at the feed pump. Further, although one membrane unit in each feed branch is exemplified, it is noted that one or more membrane units can be deployed in series in each feed branch, between the feed pump and a respective generator drive. Such an arrangement preferably is referred as a train or a chain.

According to another embodiment, the first generator drive and the second generator drive independently implement a membrane cleaning process for the respective membrane unit connected thereto, e.g., by modulating their shaft speed independently. For example, they preferably modulate their shaft speed following the same or different patterns according to the actual operation conditions. As such, the RO system allows for more flexible and adaptable control of the multiple generator drives to cater for the actual demand.

According to yet another embodiment, the first generator drive and the second generator drive are configured to recuperate energy from the permeate or brine, and transfer the recuperated energy to the feed pump based on their respective modulated shaft speed. For instance, they preferably are configured to transfer the recuperated energy alternately or simultaneously to the feed pump, depending on the respective modulated shaft speed. In this manner, the first generator drive and the second generator cooperate to improve the system energy recovery, and meanwhile, execute their respective regular or routine membrane cleaning task.

According to yet another embodiment, the feed pump is configured to evenly divide the pressure among the plurality of feed branches. Alternatively, the feed pump is configured to distribute a specific weighting of pressure/flow rate to each feed branch. Thus, the feed pump preferably allocates pressure with a weighting for a feed branch, e.g., to cater for the need of a specific manufacturing procedure or application, or based on the actual operating conditions and various system performance parameters as exemplified above.

According to a preferred embodiment, the system further comprises a second generator drive fluidly connected to a first permeate outlet of the first membrane unit. The second generator drive is configured for recuperating energy from the first fluid flow effluent from the first permeate outlet based on a second shaft speed of the second generator drive. The second generator drive is configured for inducing oscillation of the first membrane by modulating the second shaft speed. In this case, the first generator drive is preferably fluidly connected to a first concentrate outlet of the first membrane unit. Thus, this arrangement further recovers the energy carried by the permeate and/or manipulates the flow rate of the permeate to propagate pressure pulses through the permeate onto the first membrane, and thus implement a cleaning cycle. By virtue of the second generator drive targeting the permeate, energy recovery rate and cleaning efficiency are further boosted.

According to a preferred embodiment, the first generator drive and/or the second generator drive comprise an axial piston motor, and a variable frequency drive (VFD) and further preferred an electric motor. The RO system further comprises at least one control unit configured to modulate the first shaft speed and/or the second shaft speed via the corresponding VFD. Alternatively, the at least one control unit is integrated in the VFD.

In an embodiment, an electric machine is part of a VFD. The VFD is used to adjust the frequency with which the electric machine (or motor) is operated. Thus, the VFD can influence the frequency of the generation of electric energy, which is outputted by the electric machine, when the electric machine is operated as a generator. Furthermore, the VFD can influence the frequency of the electric energy which is used to drive the electric machine when operated in motor mode. The VFD can in turn adjust the operation frequency of the electric machine for example by adjusting a proper shaft speed, and thus adjust the pressure of the liquid pumped by the motor driven by the electric machine. Thus, it is possible to adapt the pressure to target certain system requirement or operational criteria during operation of the RO system.

The membrane can change its characteristics during lifetime so that a higher or a lower pressure is needed for the RO system. In light of the given specification of a membrane, the VFD can adjust the shaft speed of the generator drive in such a way that the cleaning process applied to the membrane is implemented within a safe and justifiable range of applied sheer stress. To this end, one or more sensors preferably is deployed in the RO system to monitor the pressure or TMP across the membrane unit, and feedback the pressure-related measurements to one or more control units of the RO system. Alternatively, the generator drive can voluntarily take action to adjust the shaft speed of the generator drive in response to system demand and varying situation in the RO system.

As one example, the VFD can have in-built processor(s) and execute computation or data processing on its own initiative to perform control over the generator drive. Alternatively, the VFD can communicate with the control unit(s) of the RO system for information exchange, e.g., identify or predict a potential malfunction event of the generator drive (e.g., using a machine learning, ML, module as described hereinafter), report the history profile of the shaft speed, pressure variation at the generator drive or other parameters that are relevant to the system performance. In response, the VFD can execute the control over the generator drive (e.g., first or second generator drive) under the instruction received from the control unit(s) of the RO system.

As another example, the RO system can deploy a machine learning, ML, module or an Artificial Intelligence, AI, module configured to learn from the log data or the history profile of the (first or second or pump) shaft speed. Such ML or AI module preferably is integrated within a VFD of a generator drive so that it has a holistic recognition of the operating conditions/performance of the RO system and copes with a performance degradation in a timely fashion. Such ML or AI module preferably is alternatively deployed otherwise, e.g., in the control unit(s) of the RO system. For instance, the ML or AI module preferably gathers the history data of the (first or second or pump) shaft speed for a certain time period. The ML or AI module preferably learns the pattern or regularity of various system parameters as exemplified above, e.g., the (first or second or pump) shaft speed, energy recovery rate of the system, TMP, flux or rejection rate of the first membrane unit, etc., by extracting from the gathered history data, the relevant features (e.g., statistical measures (mean, standard deviation, variation, etc.) of the respective parameters (e.g., shaft speed) over different time intervals; time-related features (hour of the day, day of the week, etc.); and/or any other domain-specific features that might influence the shaft speed, etc.. Based on the learned result, the ML or AI module can predict the (first or second or pump) shaft speed, energy recovery rate, flux or rejection rate of the first membrane unit. In this regard, the RO system can take precautionary measure based on the aforesaid prediction, e.g., adjusting the respective parameters in advance of a predicted event. For example, the RO system decides to configure the first and/or second generator drive and/or feed pump to operate in one of alternate, synchronous, hybrid cleaning mode based on a predicted TMP. For example, if the prediction indicates that the TMP is degrading slightly for the upcoming few days, the RO system preferably configures the first generator drive and the feed pump to operate in synchronous cleaning mode to immediately address the fouling event. In summary, the RO system or the first generator drive preferably apply the predicted parameters (e.g., to the control or modulation of the respective shaft speed) to facilitate and optimize the operation of the RO system, e.g., to achieve a desired membrane cleaning performance and energy efficiency.

In the system of the present disclosure, the feed pump is a hydraulic pump, and preferably is an axial piston pump. Such axial piston pump comprises a VFD as described above, and a mechanical shaft (input shaft) that is connected to a swash plate carrying a plurality of pistons arranged inside a cylinder block. The pistons preferably are axially oriented (i.e., parallel to the shaft axis). A cam angle between a normal vector of the swash plate and the shaft axis determines a displacement of the pump and effects protruding and reciprocating movement of the pistons based on a relative rotation of the swash plate and the cylinder block. This movement of the pistons is used to displace (pump) fluid from a pump inlet to a pump outlet. The use of an axial piston pump in the system advantageously allows for positive displacement pumping with a minimum of moving parts and seals as well as with oil-free lubrication. Exemplarily, the hydraulic pump is one of a Danfoss high-pressure PAH pump, a Danfoss MP1 axial piston motor, and an H1 bent axis variable motor.

In the system of the present disclosure, the generator drive comprises a hydraulic motor (e.g., based on positive displacement), and preferably an axial piston motor. The axial piston motor comprises a mechanical shaft (output shaft) that is connected to a swash plate carrying a plurality of pistons arranged inside a cylinder block. Again, the pistons preferably are axially oriented (i.e., parallel to the shaft axis). A cam angle between a normal vector of the swash plate and the shaft axis determines a displacement of the motor. Applying pressurized fluid to the pistons via a motor inlet (generator inlet) effects protruding and reciprocating movement of the pistons and a relative rotation of the swash plate and the cylinder block. The output (rotational) speed of the axial piston motor is proportional to the input flow and its drive torque is proportional to the difference in pressure between the motor inlet and outlet. The use of an axial piston motor in the system advantageously allows for generating rotational energy from pressurized fluid with a minimum of moving parts and seals as well as with oil-free lubrication. Another important advantage is that the axial piston pump/motor allows a wide operational window in both pressures and flows and still maintaining relative high energy efficiencies. The use of axial piston motor and axial piston pump further allows for a system with high symmetry (and thus easy maintenance) and low vibrations. Exemplarily, the generator drive is one of a Danfoss Gen-Drive, a Danfoss MP1 axial piston motor, and an H1 bent axis variable motor.

Further preferred, the axial piston pump and/or the hydraulic axial piston motor preferably has a direct displacement control, either mechanically, electro-mechanically or hydro-mechanically. Therein, the control circuits (e.g., the VFDs) of the axial piston pump and/or the hydraulic piston are preferably connected, e.g., for allowing for a combined control of pump and motor. Also preferred, the axial piston pump and/or the hydraulic axial piston motor are each pressure-compensated. Therein, the pressure compensation might be configured to adjust an output flow of the pump to maintain a predefined pressure at the pump outlet and/or to adjust an input flow of the motor to maintain a predefined pressure at the motor inlet. Further preferred, the pressure compensation is configured to control an input flow of the motor to maintain a predefined pressure at the pump outlet and/or to adjust an output flow of the pump to maintain a predefined pressure at the motor inlet. Such configuration advantageously prevents overpressure at the pump side and reduces the likelihood of system failure.

The functionalities of the control unit according to the invention can be implemented by electrical or electronic parts or components (hardware), by firmware (ASIC) and/or by executing a suitable program (software). Preferably, the functionalities of the control unit according to the invention are realized or implemented by a combination of hardware, firmware and/or software. For example, individual components of the control unit according to the invention are designed as a separate integrated circuit or arranged on a common integrated circuit in order to execute individual functionalities.

The individual functionalities of the control unit according to the invention are also preferably designed as one or more processes that run on one or more processors in one or more electronic computing devices and are generated when one or more computer programs are executed. The control unit is thereby designed to cooperate with the other components, in particular the pressure and/or flow sensor, in order to realize the functionalities of the system according to the invention described herein. It is further apparent to the skilled person that the functionalities of several computers (data processing devices, control units, control devices) can be combined or combined in a single device or that the functionality can be transferred from a specific data processing device to a control unit.

Another aspect of the present disclosure relates to a method of operating a system for reverse osmosis, RO, according to the present disclosure as described above. The method of the present disclosure comprises recuperating, by the first generator drive energy, from a first fluid flow effluent from the first membrane unit based on a first shaft speed of the first generator drive. The method further comprises modulating by the first generator drive the first shaft speed. The method further comprises applying by the first generator drive oscillation to the first membrane based on the modulated first shaft speed.

In a preferred embodiment, the method of the present disclosure further comprises transferring, by the first generator drive, electrical energy to a feed pump according to the modulated first shaft speed. According to this embodiment, the method further comprises modulating, by the feed pump, the shaft speed of the feed pump based on the transferred electrical energy. Further preferred, the first generator drive is operatively connected to the feed pump, which is fluidly connected to a first feed inlet of the first membrane unit.

In a preferred embodiment, the method of the present disclosure further comprises modulating the shaft speed of the feed pump to remain constant when the first shaft speed fluctuates periodically. According to this embodiment, the method further comprises modulating the shaft speed of the feed pump to fluctuate reversely with respect to the fluctuation of the first shaft speed. The method further comprises modulating the shaft speed of the feed pump to fluctuate periodically when the first shaft speed remains constant.

In a preferred embodiment, the method of the present disclosure further comprises pumping, by the first generator drive, the first fluid flow into a second feed inlet of a second membrane unit with a second membrane. According to this embodiment, the method further comprises modulating, by a second generator drive, a second shaft speed of the second generator drive fluidly connected to a second concentrate outlet of the second membrane unit. The method further comprises applying, by the second generator drive, oscillation to the second membrane based on the second shaft speed. The method further comprises recuperating, by the second generator drive, energy from a second fluid flow effluent from the second concentrate outlet based on the second shaft speed. The method further comprises transferring, by the second generator drive, electrical energy to the first generator drive based on the second shaft speed. The method further comprises modulating the first shaft speed of the first generator drive based on the electrical energy transferred from the second generator drive.

Another aspect of the present disclosure relates to generator drive for use in the system for RO according to the present disclosure as described above. The generator drive of the present disclosure comprises an axial piston motor. The axial piston motor is configured to recuperate energy from a fluid flow passing through the generator drive based on a shaft speed of the axial piston motor. The generator drive further comprises a variable frequency drive, configured to modulate the shaft speed of the axial piston motor. The generator drive further comprises an electric motor, configured to transform the recuperated energy into electric energy. Further preferred, the generator drive is configured to induce oscillation to one or more membranes of the system based on the shaft speed modulated via the variable frequency drive.

Another aspect of the present disclosure relates to use of a generator drive for inducing oscillation in one or more membranes of a reverse osmosis, RO, system, according to the present disclosure as described above. The generator drive is configured to recuperate energy from a fluid flow passing through the generator drive, and is configured to modulate a shaft speed thereof to induce oscillation of the one or more membranes, according to one or more embodiments as described above.

The use of generator drive for inducing oscillations on the membrane excludes the necessity of deploying one or more valves in the RO system for controlling the flow rate and pressure pulses on the membrane surface, and thus circumvents the sophisticated control of valves, the risk of system failure and downtime for repairment of valves and the difficulty of maintenance and troubleshooting for multiple valves. Further, the use of the generator drive according to the present disclosure mitigates the processing burden on the pump, unlike the conventional methodology of relying on only the control of the pump speed for cleaning purpose. As such, the use of generator drive according to the present disclosure simplifies the system design and provides flexibility in adapting to changing operating conditions or system requirements.

Further preferred embodiments of the method, the generator drive and the use of the generator drive of the present disclosure correspond to the preferred embodiments of the RO system of the present disclosure as described above, and provide the advantages as described above with respect to the system of the disclosure. Further aspects and preferred embodiments of the invention are disclosed by the dependent claims, the drawings and the following description of the drawings. Different disclosed embodiments are advantageously combined with each other unless explicitly stated otherwise.

### Brief Description of the Drawings

The features of the invention become apparent to those skilled in the art by the detailed description of exemplary embodiments with reference to the accompanying drawings in which:
FIG. 1 illustrates a system for RO according to an embodiment of the present disclosure.
FIG. 2a illustrates the timing diagrams of the shaft speed modulation by a generator drive and the shaft speed of a feed pump, the corresponding flow rates and the measured TMP, according to an embodiment of the present disclosure.
FIG. 2b illustrates the timing diagrams of the shaft speed modulation by a feed pump and a generator drive, the corresponding flow rates and the measured TMP, according to an embodiment of the present disclosure.
FIG. 2c illustrates the timing diagrams of the shaft speed modulation by a feed pump and a generator drive, the corresponding flow rates and the measured TMP, according to an embodiment of the present disclosure.
FIG. 2d illustrates the timing diagrams of the shaft speed modulation by a feed pump and a generator drive, the corresponding flow rates and the measured TMP, according to an embodiment of the present disclosure.
FIG. 3 illustrates a system for RO according to an embodiment of the present disclosure.
FIG. 4 illustrates a system for RO according to an embodiment of the present disclosure.
FIG. 5 illustrates a flowchart of a method according to an embodiment of the present disclosure.
FIG. 6 illustrates a generator drive according to an embodiment of the present disclosure.

### Detailed Description

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present invention, preferably is embodied in various different forms, and should not be construed as being limited to only the illustrated embodiments herein. These embodiments are provided as examples so that this disclosure will be complete and will fully convey the aspects and features of the present invention to those skilled in the art.

Accordingly, elements not considered necessary to those having skill in the art for a complete understanding of the features of the present invention may not be described.

As used herein, the term "and/or" includes any and all combinations of one or more of the associated listed items. Further, the use of "may" when describing embodiments of the present invention refers to "one or more embodiments of the present invention". In the following description of embodiments of the present invention, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element preferably is named a second element and, similarly, a second element preferably is named a first element, without departing from the scope of the present invention. As used herein, the term "substantially", "about", and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

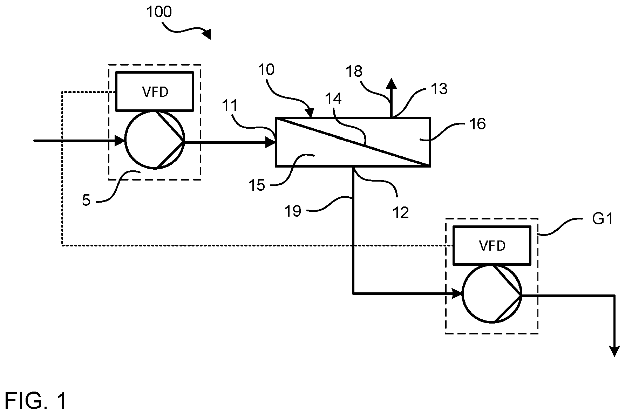

FIG. 1 schematically illustrates a system 100 for reverse osmosis, RO according to an embodiment of the present disclosure. The system 100 comprises a first membrane 10, and a first generator drive G1.

The first membrane unit 10 has a first feed inlet 11, a first concentrate outlet 12, a first permeate outlet 13, and a first membrane 14. In a filtration process, the first membrane unit comprises a high-pressure chamber 15 and a low-pressure chamber 16 that are separated by the first membrane 14. These chambers preferably form a RO tank that is configured to house a RO process and to withstand the modulated pressures.

The first generator drive G1 is fluidly connected to the first concentrate outlet 12 of the first membrane unit 10. The first generator drive G1 may comprise a first axial piston motor and a first VFD as described above. The first generator drive G1 is configured for recuperating energy from a first fluid flow effluent 19 from the first concentrate outlet 12 based on a first shaft speed of the first generator drive G1. Therein, the concentrate liquid is discharged via the first generator drive G1 after recuperating the energy. The first generator drive G1 is further configured for inducing oscillations of the first membrane 14 by modulating the first shaft speed to generate pressure pulses in the first fluid flow 19.

The system 100 further comprises a feed pump 5. The feed pump 5 comprises an axial piston motor and a VFD as described above. The feed pump 5 is fluidly connected to the first feed inlet 11 of the first membrane unit 10. The feed pump 5 is configured to modulate a shaft speed thereof based on the first shaft speed of the first generator drive G1.

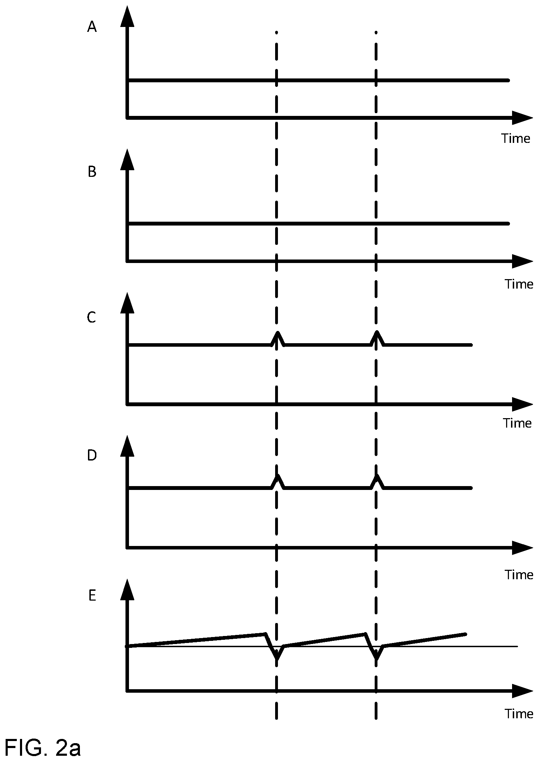

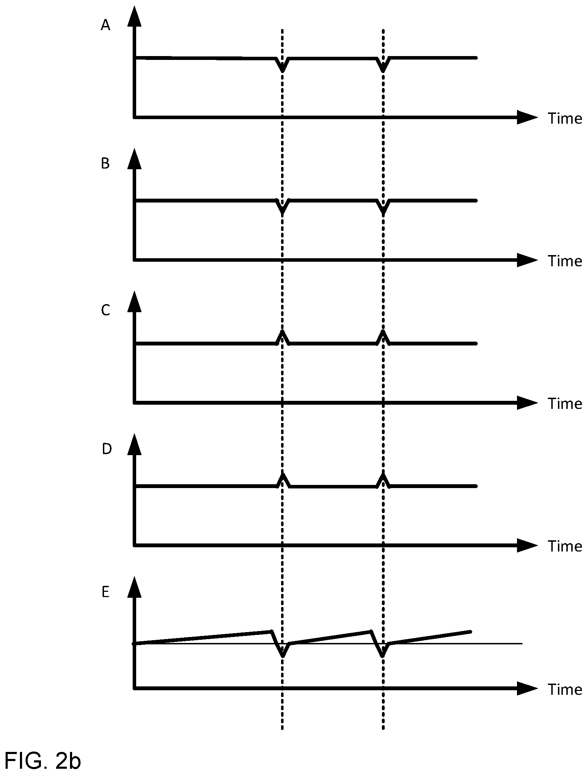

FIG. 2a depicts the timing diagrams of the shaft speed modulation by a first generator drive G1 and a shaft speed of a feed pump 5, the corresponding flow rates and the measured TMP, according to an embodiment of the present disclosure. In this exemplary timing diagram, the feed pump 5 and the first generator drive G1 is configured to operate in alternate cleaning mode. The longitude axis represents the amplitude of a corresponding parameter, where letter "A", "B", "C", "D", and "E" represent the shaft speed of the feed pump 5, the flow rate at the feed pump 5, the first shaft speed of the first generator drive G1, the flow rate of the first fluid flow at the first generator drive G1, and the pressure drop (i.e., TMP) from the first feed inlet to the first concentrate outlet of the first membrane unit, respectively. The horizontal axis represents the time scale. The dashed line represents a common or same certain time point or moment T, e.g., T = t₀, ti, etc. The same representation applies to FIGS. 2B to 2C.

As illustrated in FIG. 2a, the first generator drive G1 modulates its first shaft speed to generally remain steady or at a constant level, but fluctuate at a certain time interval when the shaft speed of the feed pump 5 remains constant. The fluctuations are characterized by a short duration and miniature variation in amplitude, e.g., a thorn-like spike but with moderate or little sharpness. Namely, the fluctuations occur within a limited time interval or duration T1 and have a limited variation of the amplitude with respect to the constant level. The shape, pattern, duration T1 and frequency of such fluctuations are designed to preserve the integrity of the first membrane 14 or satisfy specific system requirements, and are not limited to the illustration in FIG. 2a. Thus, although FIG. 2a depicts two times of spike-like fluctuations for a duration T1, this serves illustrative purpose, only. It is readily apparent to the skilled person that such fluctuations may occur at a different frequency, e.g., on a periodic basis, and more than the illustrated number of times when zooming out on the time scale.

The modulated first shaft speed of the first generator drive G1 influences the flow rate of the first fluid flow 19 passing through the first generator drive G1, e.g., in a proportional relationship, whereby at substantially the same time point, corresponding fluctuations with a same or similar shape (e.g., the aforesaid spike) are induced in the flow rate of the first fluid flow 19, and are aligned with those in the first shaft speed in time, e.g., for the duration T1. For example, the increase in the flow rate of the first fluid flow 19 indicates an increased volume being extracted out of the first membrane 14, and thus reduces the pressure within the feed chamber 15. This increased volume extraction causes a turbulence in the first membrane unit 10 which induces deformation of the membrane 14 towards the feed chamber 15, thereby cracking the aggregation of the foulants and unclogging the membrane surface.

In order to observe the fluid rejection rate of the first membrane 14 and test the cleaning efficiency in the alternate cleaning mode, pressure drop from the first feed inlet 11 to the first concentrate outlet 12 or stated differently, transmembrane pressure (TMP) (denoted with reference sign "E") of the first membrane unit 10 is measured during the operation of the system by means of a pressure sensor, which can be optionally deployed in the system. Although not explicitly illustrated throughout the drawings, such a pressure sensor can be fluidly connected between the first feed inlet 11 and the first concentrate outlet 12. When the foulants are increasingly deposited on the membrane surface, the output permeate pressure may slightly or barely increase even though the input feed flow or feed pressure in the feed chamber 15 increases dramatically, thus yielding an increasing TMP. As noted above, given the same feed pressure or flow rate, an increasing TMP indicates an increasing rejection rate of the membrane, or increasing resistance against fluid passage, which accordingly signifies an augmented obstruction on account of the foulants accumulating at the membrane surface.

As a result of the increased volume extraction by the first generator drive G1, the TMP of the first membrane unit 10 reduces when the feed flow rate remains constant. Namely, the TMP changes in an opposite direction with respect to the fluctuations in the rate of the first fluid flow 19, which accounts for the consequent fluctuations in the TMP as illustrated in FIG. 2a. In greater detail, upon the rise in the first shaft speed, TMP rather firstly goes downward crossing its normal level due to the unclogging effect, and then bottoms out while the first shaft speed reaches peak amplitude. Upon the conclusion of a fluctuation of the first shaft speed, the TMP returns to normal level. Thus, the overall variation of the TMP indicates that the first generator drive G1 successfully carries out an effective cleaning routine for the membrane 14. The above-exemplified alternate cleaning mode further realizes even distribution of work shift between the first generator drive G1 and the feed pump 5, which is advantageous for load balancing.

FIG. 2b depicts the timing diagrams of the shaft speed modulation by a feed pump 5 and a first generator drive G1, the corresponding flow rates and the measured TMP, according to an embodiment of the present disclosure. In this exemplary timing diagram, the feed pump 5 and the first generator drive G1 are configured to operate in synchronous cleaning mode, wherein the timings of the first shaft speed and the shaft speed of the feed pump 5 synchronize such that the fluctuations appear concurrently in reverse directions. A repetitious description is omitted for the fluctuations of the first shaft speed in FIG. 2b, since they follow substantially the same pattern as the elaborated ones of the shaft speed of the feed pump in FIG. 2a. In FIG. 2b, the pressure reduction inside the feed chamber 15 preferably is multiplied by a factor of e.g., 1.5 to 2.5, and preferably 2 (i.e., doubled) compared to FIG. 2a. Accordingly, the cleaning effect is also enhanced by the factor of, e.g., 1.5 to 2.5 compared to the alternate cleaning mode in FIG. 2a. The alternate cleaning mode involves pressure pulses with an appropriate frequency, and/or appropriate duration and/or moderate amplitude that are conducive to preserving the membrane integrity.

As seen from FIG. 2b, while both the shaft speed of the feed pump 5 and the first shaft speed of the first generator drive G1 remain constant, i.e., while the feed pressure remains invariant, the TMP elevates gradually from the initial value (i.e., the value at T = 0) (e.g., at a normal or desirable level) over time until the end of the fluctuations of each shaft speed. Specifically, the TMP initially exhibits a steady increase (i.e., indicates that the foulant is depositing), and then a fluctuation with a similar trend for a same duration as that of the first shaft speed of the first generator drive G1. Subsequently, i.e., after the duration T1 elapses, the TMP finally plummets back to the initial value as a consequence of the synchronous fluctuations in the first shaft speed and the pump shaft speed. Therefore, the TMP indicates that the foulants are removed and the blockage is resolved at the first membrane 14. At this point, the membrane cleaning is effective.

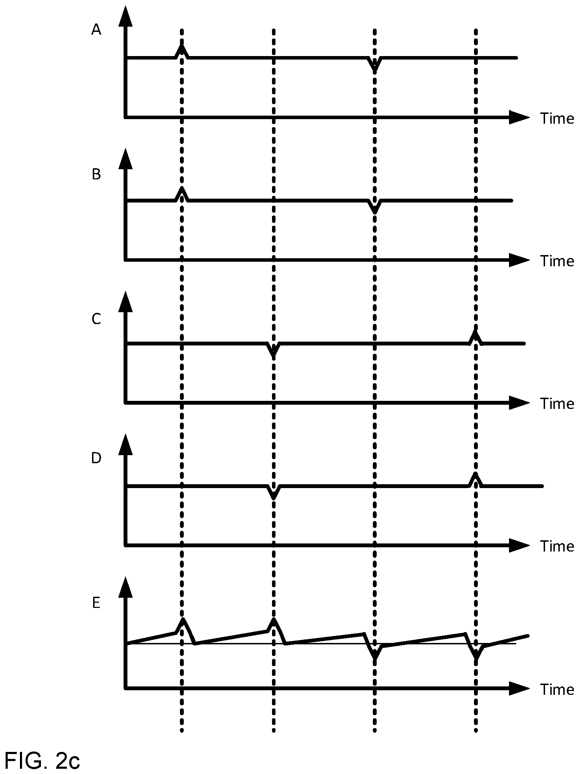

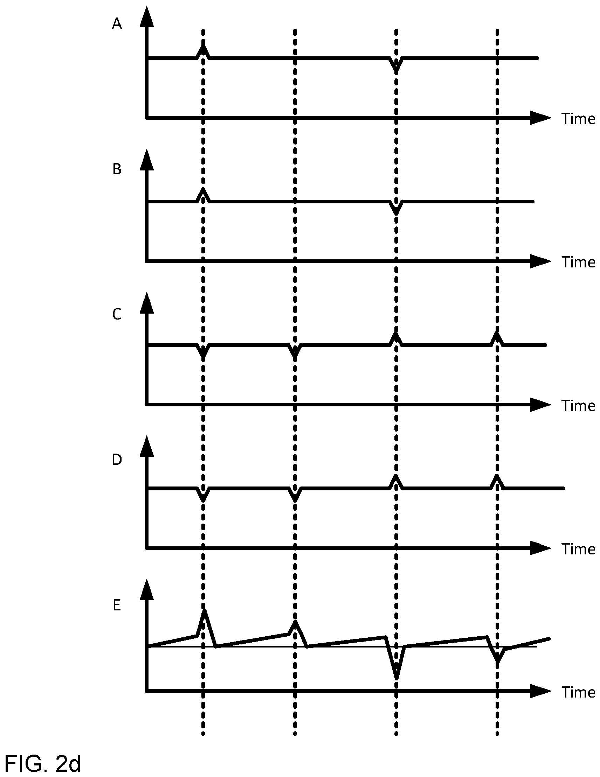

FIG. 2c depicts the timing diagrams of the shaft speed modulation by a feed pump 5 and a first generator drive G1, the corresponding flow rates and the measured TMP, according to an embodiment of the present disclosure. In this exemplary timing diagram, the feed pump 5 and the first generator drive G1 are configured to operate in alternate cleaning mode. In FIG. 2d, the fluctuations of the first shaft speed and the pump shaft speed periodically stagger such that the TMP experiences two upward spiky fluctuations during the first round of staggering and two downward spiky fluctuations during the second round of staggering. Like FIGS. 2A to 2B, the cleaning process ends up with the TMP in FIG. 2c returning to normal level at the end of each fluctuation, which reflects that the cleaning process is effective.

FIG. 2d depicts the timing diagrams of the shaft speed modulation by a feed pump 5 and a first generator drive G1, the corresponding flow rates and the measured TMP, according to an embodiment of the present disclosure. In this exemplary timing diagram, the feed pump 5 and the first generator drive G1 are configured to operate in hybrid cleaning mode, wherein the timings of the first shaft speed and the pump shaft speed may semi-synchronize such that their fluctuations stagger and appear concurrently in reverse directions at the designated time points. In the first round of the staggering and synchronization, the TMP experiences two upward spiky fluctuations with different amplitudes. For instance, the first spiky fluctuation is 1.5 to 2.5 times (preferably, 2 times) greater than the second spiky fluctuation in terms of amplitude. In the second round of the staggering and synchronization, the TMP experiences two downward spiky fluctuations with different amplitudes. For instance, the third spiky fluctuation is 1.5 to 2.5 times (preferably, 2 times) greater than the fourth spiky fluctuation in terms of amplitude. As an alternative, the first and second round may alternate periodically. The hybrid cleaning mode optimizes the cleaning performance while preserving the membrane integrity, as it combines the advantages of both the alternate and synchronous cleaning mode.

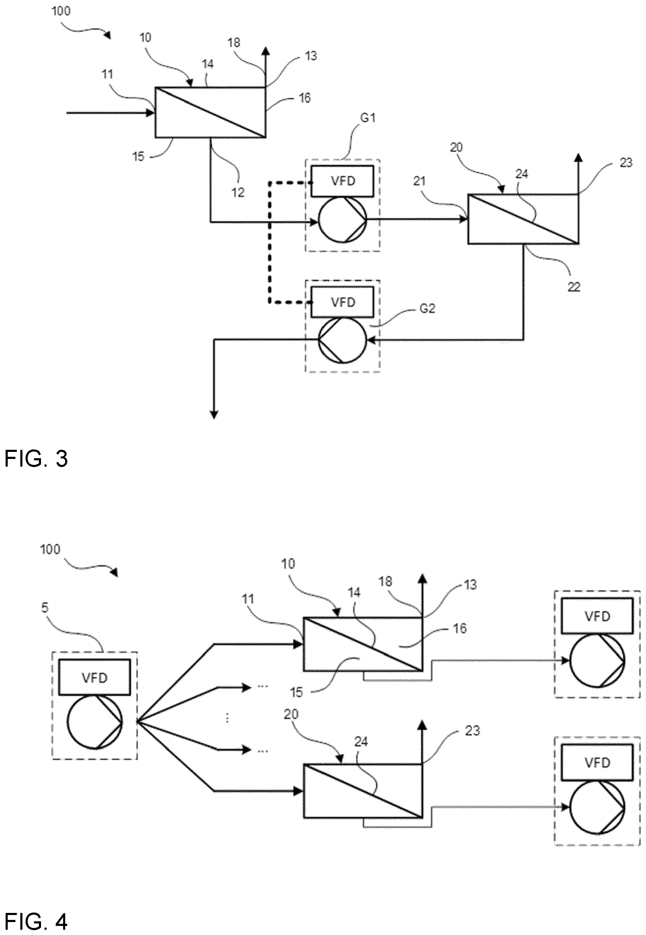

FIG. 3 schematically illustrates a system 100 for RO according to an embodiment of the present disclosure. The system 100 comprises a second membrane unit 20 with a second feed inlet 21, a second concentrate outlet 22, a second permeate outlet 23, and a second membrane 24. The system 100 further comprises a second generator drive G2 fluidly connected to the second concentrate outlet 22 of the second membrane unit 20. The system in FIG. 3 can be set up on the foundation of the system illustrated in FIG. 1.

In FIG. 3, the first generator drive G1 is fluidly connected between a first concentrate outlet 12 of the first membrane unit 10 and a second feed inlet 21 of the second membrane unit 20, and configured to pump the first fluid flow via the second feed inlet 21 into the second membrane unit 20. In the configuration shown in FIG. 3, the first generator drive G1 is configured to operate in motor mode whereas the second generator drive G2 is configured to operate in generator mode, although the second generator drive G2 may have the same structure and/or functionality as the first generator drive G1. Thus, the second generator drive G2 is configured for recuperating energy from a second fluid flow effluent from the second membrane unit 20 based on a second shaft speed of the second generator drive G2. Therein, the second fluid flow is discharged via the second generator drive G2 after recuperating the energy. The second generator drive G2 is further configured for inducing oscillations of the second membrane 24 by modulating the second shaft speed.

Particularly, the second generator drive G2 is fluidly connected to a second concentrate outlet 22 of the second membrane unit 20, and operatively connected to the first generator drive G1. The second generator drive G2 is configured to transfer electrical energy to the first generator drive G1 based on the modulated second shaft speed. The first generator drive G1 and the second generator drive G2 preferably is configured to perform shaft speed modulation according to FIGS. 2A to 2D. That is, the timing diagrams of feed pump 5 in FIGS. 2A to 2D are applicable to the first shaft speed. In this case, the first shaft speed is modulated based on the second shaft speed (e.g., the timing thereof). Likewise, the timing diagrams of the first shaft speed in FIGS. 2A to 2D are applicable to the second shaft speed. In this case, the feed pump 5 in the system may disable its shaft speed modulation or stagger the fluctuations of its shaft speed, or operate in collaboration and/or resonance with respect to those of the first and second shaft speed, as is readily apparent to the persons skilled in the art upon recognizing the inventive concept of the present disclosure.

FIG. 4 illustrates a system 100 for RO according to an embodiment of the present disclosure. The system 100 comprises a feed pump 5, a first membrane unit 10 and a second membrane unit 20. These two membrane units have the same structure and numerals as those in FIG. 3. The feed pump 5 has 3 or more feed branches, although FIG. 4 particularly illustrates the details of two branches therein. Further, although not expressly illustrated, it is noted that one or more membrane units can be deployed (e.g., in series) in each feed branch.

In FIG. 4, The first feed inlet 11 of the first membrane unit 10 is fluidly connected to a first feed branch of the feed pump 5. The second feed inlet 21 of the second membrane unit 20 is fluidly connected to a second feed branch of the feed pump 5. Preferably, the feed pump 5 is configured to evenly distribute the pressure among the plurality of feed branches. The system further comprises two generator drives arranged in each feed branch according to the present disclosure. Therein, a first generator drive G1 and a second generator drive G2 are configured to alternately or simultaneously induce oscillations of the first membrane 14 and the second membrane 24, respectively, by modulating a first shaft speed and a second shaft speed of them, respectively. The first generator drive G1 and the second generator drive G2 are further configured to alternately or simultaneously supply the feed pump 5 with the electrical energy transformed from the kinetic energy of the respective concentrate flows, based on the modulated first shaft speed and the second shaft speed, respectively.

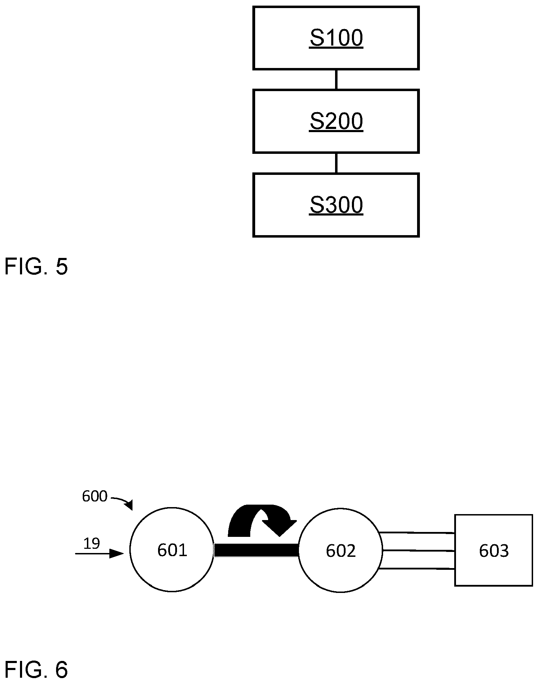

FIG. 5 illustrates a flowchart of a method for operating a system 100 for reverse osmosis, RO, according to an embodiment of the present disclosure. The system 100 comprises a first membrane unit 10 with a first membrane 14, and a first generator drive G1 disposed downstream of the first membrane unit 10, as illustrated in FIG. 1. The method comprises recuperating S100, by the first generator drive G1, energy from a first fluid flow effluent from the first membrane unit 10 based on a first shaft speed of the first generator drive G1. The method further comprises modulating S200, by the first generator drive G1, the first shaft speed. The shaft speed modulation for the first generator drive G1 in this method may optionally comply with FIGS. 2A to 2D. The method further comprises applying S300, by the first generator drive G1, oscillation to the first membrane 14 based on the modulated first shaft speed. Step S 100 and S200 may occur concurrently or sequentially. If sequentially, the order of step S100 and S200 preferably is exchanged.

FIG. 6 illustrates a generator drive 600 according to an embodiment of the present disclosure. The generator drive 600 ("Gen-Drive") comprises a hydraulic motor 601, preferably, (e.g., bidirectional) axial piston motor. The hydraulic motor 601 recovers the kinetic energy from the pressurized fluid flow (e.g., concentrate flow or permeate flow) and converts the recovered energy into mechanical energy based on rotation speed of a shaft of the generator drive 600. The rotation speed or shaft speed is controlled by the generator drive 600. The generator drive 600 further comprises an electric motor 602, mechanically connected to the hydraulic motor 601 through the shaft. The electric motor 602 preferably is preferably a 3-phase electric motor 602, as illustrated in FIG. 6. The electric motor 602 converts the mechanical energy into electric energy, upon rotation of the shaft of the generator drive 600 based on a shaft (rotation) speed.

The generator drive 600 further comprises a variable frequency drive 603 (VFD), which is operatively connected to the electric motor 602. The VFD 603 preferably is integrated as a part of the electric motor 602, although FIG. 6 illustrates them as standalone components. The VFD 603 can control the generator drive 600 to operate in generator mode. In this case, the electric motor 602 performs the energy transformation of kinetic energy into electric energy based on the shaft speed of the generator drive 600. The generator drive 600 sends the electricity to (e.g., the VFD 603 of) a feed pump at the correct voltage and frequency to augment the power supply from the electrical grid, thereby reaching the objective of energy recovery. The VFD 603 is configured to control or modulate the speed of the rotation of a shaft of the generator drive 600 (within a predefined range, e.g., between a first threshold and a second threshold) to satisfy the systematic or industrial requirement for energy recovery rate and/or membrane cleaning performance (e.g., an expected TMP or flux rate) according to the present disclosure. Exemplarily, the VFD 603 may modulate the shaft speed according to the timing graphs as shown in FIG. 2a to 2d.

The VFD 603 can control the generator drive 600 to operate in motor mode, in which the generator drive 600 functions as a hydraulic pump. In motor mode, the electric motor 602 actively transforms electricity into mechanical energy based on the shaft speed as instructed by the VFD 603. The mechanical energy contributes to the motion of the hydraulic motor 601 to pressurize fluid flow. In motor mode, the generator drive 600, in particular, the VFD 603 actively modulates the shaft speed to effectuate pressure pulses in the fluid flow such that oscillations are induced on the foulant-membrane interface to crack the deposition of the fouling media, and thus implement an effective cleaning process. Exemplarily, the VFD 603 may modulate the shaft speed according to the timing graphs as shown in FIG. 2a to 2d.

### Reference signs

- A: shaft speed of feed pump
- B: flow rate of the feed flow
- C: first shaft speed of first generator drive
- D: flow rate of first fluid flow
- E: TMP of first membrane unit
- 5: feed pump
- 10: first membrane unit
- 11: first feed inlet
- 12: first concentrate outlet
- 13: first permeate outlet
- 14: first membrane
- 15: feed chamber/high-pressure chamber
- 16: low-pressure chamber
- 18: permeate (flow)
- 19: first fluid flow
- 20: second membrane unit
- 21: second feed inlet
- 22: second concentrate outlet
- 23: second permeate outlet
- 24: second membrane
- 100: system for RO
- 600: generator drive
- 601: hydraulic motor
- 602: VFD
- G1: first generator drive
- G2: first generator drive

## Claims

1. System (100) for reverse osmosis, RO, comprising:
a first membrane unit (10) with a first feed inlet (11), a first concentrate outlet (12), a first permeate outlet (13), and a first membrane (14); and
a first generator drive (G1) fluidly connected to and disposed downstream of the first membrane unit (10),
wherein the first generator drive (G1) is configured for recuperating energy from a first fluid flow effluent from the first membrane unit (10) based on a first shaft speed of the first generator drive (G1) and for inducing oscillations of the first membrane (14) by modulating the first shaft speed to generate pressure pulses in the first fluid flow.

2. The system (100) of claim 1, further comprising:
a feed pump (5) fluidly connected to the first feed inlet (11) of the first membrane unit (10),
wherein the feed pump (5) is configured to modulate a shaft speed of the feed pump (5) based on the first shaft speed.

3. The system (100) of claim 2, wherein the first generator drive (G1) is operatively connected to the feed pump (5), and is configured to:
transfer electrical energy to the feed pump (5) based on the modulated first shaft speed, and
modulate the shaft speed of the feed pump (5) based on the transferred electrical energy.

4. The system (100) of claim 2 or 3, wherein the feed pump (5) is configured to modulate the shaft speed of the feed pump (5) to:
remain constant when the first shaft speed fluctuates periodically,
fluctuate reversely with respect to the fluctuation of the first shaft speed, and/or
fluctuate periodically when the first shaft speed remains constant.

5. The system (100) of any of the preceding claims, further comprising:
a second membrane unit (20) with a second feed inlet (21), a second concentrate outlet (22), a second permeate outlet (23), and a second membrane (24); and
a second generator drive (G2) fluidly connected to and disposed downstream of the second membrane unit (20),
wherein the second generator drive (G2) is configured for recuperating energy from a second fluid flow effluent from the second membrane unit (20) based on a second shaft speed of the second generator drive (G2) and for inducing oscillations of the second membrane (24) by modulating the second shaft speed.

6. The system (100) of claim 5, wherein:
the first generator drive (G1) is fluidly connected between a first concentrate outlet (12) of the first membrane unit (10) and a second feed inlet (21) of the second membrane unit (20), and configured to pump the first fluid flow via the second feed inlet (21) into the second membrane unit (20);
the second generator drive (G2) is fluidly connected to a second concentrate outlet (22) of the second membrane unit (20), and operatively connected to the first generator drive (G1); and
the second generator drive (G2) is configured to transfer electrical energy to the first generator drive (G1) based on the modulated second shaft speed.

7. The system (100) of claim 5, wherein:
the first feed inlet (11) of the first membrane unit (10) is fluidly connected to a first feed branch of the feed pump (5), and the second feed inlet (21) of the second membrane unit (20) is fluidly connected to a second feed branch of the feed pump (5); and
the first generator drive (G1) and the second generator drive (G2) are configured to alternately or simultaneously induce oscillations of the first membrane (14) and the second membrane, respectively, by modulating the first shaft speed and the second shaft speed, respectively.

8. The system (100) of any of claims 5 to 7, wherein the first generator drive is configured to modulate the first shaft speed based on the second shaft speed.

9. The system (100) of any one of claims 1 to 8, wherein the first generator drive (G1) and/or the second generator drive (G2) comprise:
an axial piston motor, and
a variable frequency drive,
wherein the system further comprises at least one control unit configured to modulate the first shaft speed and/or the second shaft speed via the variable frequency drive.

10. A method of operating a system for reverse osmosis, RO, comprising a first membrane unit (10) with a first membrane (14), and a first generator drive (G1) disposed downstream of the first membrane unit (10), the method comprising:
recuperating (S100), by the first generator drive (G1), energy from a first fluid flow effluent from the first membrane unit (10) based on a first shaft speed of the first generator drive (G1);
modulating (S200), by the first generator drive (G1), the first shaft speed; and
applying (S300), by the first generator drive (G1), oscillation to the first membrane (14) based on the modulated first shaft speed.

11. The method of claim 10, further comprising:
transferring, by the first generator drive (G1), electrical energy to a feed pump (5) according to the modulated first shaft speed;
modulating, by the feed pump (5), the shaft speed of the feed pump (5) based on the transferred electrical energy,
wherein the first generator drive (G1) is operatively connected to the feed pump (5), which is fluidly connected to a first feed inlet of the first membrane unit (10).

12. The method of claim 11, further comprising modulating the shaft speed of the feed pump (5) to:
remain constant when the first shaft speed fluctuates periodically,
fluctuate reversely with respect to the fluctuation of the first shaft speed, and/or
fluctuate periodically when the first shaft speed remains constant.

13. The method of any one of claim 10 to 12, further comprising:
pumping, by the first generator drive (G1), the first fluid flow into a second feed inlet of a second membrane unit (20) with a second membrane (24);
modulating, by a second generator drive (G2), a second shaft speed of the second generator drive (G2) fluidly connected to a second concentrate outlet of the second membrane unit (20);
applying, by the second generator drive (G2), oscillation to the second membrane (24) based on the second shaft speed;
recuperating, by the second generator drive (G2), energy from a second fluid flow effluent from the second concentrate outlet based on the second shaft speed;
transferring, by the second generator drive (G2), electrical energy to the first generator drive (G1) based on the second shaft speed; and
modulating the first shaft speed of the first generator drive (G1) based on the electrical energy transferred from the second generator drive (G2).

14. A generator drive for use in the system of claim 1 to 9, comprising:
an axial piston motor, configured to recuperate energy from a fluid flow passing through the generator drive based on a shaft speed of the axial piston motor, and
a variable frequency drive, configured to modulate the shaft speed of the axial piston motor,
an electric motor, configured to transform the recuperated energy into electric energy, and,
wherein the generator drive is configured to induce oscillation to one or more membranes of the system based on the shaft speed modulated via the variable frequency drive.

15. Use of a generator drive for inducing oscillation in one or more membranes of a reverse osmosis, RO, system, wherein the generator drive is configured to recuperate energy from a fluid flow passing through the generator drive, and is configured to modulate a shaft speed thereof to induce oscillation of the one or more membranes.
